# EUROPEAN PATENT APPLICATION

(11) **EP 2 397 946 A1**
(43) Date of publication of application: **21.12.2011**
(21) Application number: 09840098.9
(22) Date of filing: 30.10.2009
(51) Int. Cl.: G06F 12/06

(54) **STORAGE SYSTEM USING A RAPID STORAGE DEVICE AS A CACHE**

(30) Priority: 13.02.2009 KR 20090011781
(71) Applicant: Indilinx Co., Ltd., Gyeonggi-do 463-760 (KR)
(72) Inventor: HEO, Jin Yong, Seongnam-si Gyeonggi-do 463-760 (KR); PARK, Han-Mook, Seongnam-si Gyeonggi-do 463-760 (KR); AN, Hyung Geun, Seongnam-si Gyeonggi-do 463-760 (KR)
(74) Representative: Desormiere, Pierre-Louis
(86) International application number: PCT/KR2009/006339
(87) International publication number: WO 2010/093108

(57) **Abstract**

Provided is a storage system using a high speed storage device as a cache. The storage system includes a large-volume of first storage device, a high speed second storage device, and a Random Access Memory (RAM). The large-volume of first storage device corresponds to a Hard Disk Drive (HDD), and the high speed second storage device corresponds to a Solid State Drive (SSD). Also, the high speed second drive is used as a cache. The first storage device manages content files super block by super block, and the second storage device manages cache files block by block.

## Description

### Technical Field

The present invention relates to a technology that may be applicable to a storage system, and more particularly, to a storage system for a server that streams multimedia content to a plurality of users.

### Background Art

Interest in a streaming technology for transmitting multimedia content in real time is increasing. A streaming server may reduce a size of storage space used by a plurality of users, by transmitting content files stored in a storage system to the plurality of users in real time.

The storage system of the streaming server performs a reading operation more often than a writing operation, and accordingly a rate at which the reading operation proceeds may need to be increased. Also, since the storage system stores a large volume of multimedia contents, a large volume of storage space is required. Accordingly, developing a storage system capable of increasing a rate of reading operation, and securing a large volume of storage space is important.

Interest in a Solid State Drive (SSD) that may provide a high access rate or a high input/output rate is greatly increasing. The streaming server may provide a streaming service with high quality using the SSD providing a high access rate in the storage system. However, the SSD has a relatively small storage capacity, and accordingly it may be problematic to install an intact SSD in the streaming server.

Thus, there is a desire for a technology associated with a storage system that uses a storage device providing a high access rate, and also has a large volume of storage apace.

### Disclosure of Invention

### Technical Goals

An aspect of the present invention provides a storage system that may simultaneously use a storage device having a high access rate as a cache, and a storage device having a large volume of storage space, thereby providing a technology capable of providing a sufficient volume of storage space, and also capable of improving an access rate.

Another aspect of the present invention provides a storage system that may include a storage device, having a large volume of storage space, to manage content files in super block units, and a storage device, having a high access rate, to manage cache files in block units, thereby providing a technology capable of improving a rate at which a reading operation proceeds a rate of reading operation.

Still another aspect of the present invention provides a storage system that may provide an optimized mechanism for properly selecting a block or a super block to be cached, properly deleting the cached block or super block, or the like.

### Technical solutions

According to an aspect of the present invention, there is provided a storage system using a high speed storage device as a cache, the system including a first storage device to store a plurality of content files including a plurality of blocks, and to manage the plurality of blocks in super block units, the super block having a predetermined size, a second storage device to cache at least one super block among the plurality of super blocks, and to manage the at least one super block in block units, and a Random Access Memory (RAM) to store at least one block among the plurality of blocks.

The storage system may further include an input/output scheduler to check whether a target block is stored in the second storage device or the RAM in response to a read request from an application related to the target block, and to return the target block extracted from at least one of the first storage device, the second storage device, and the RAM based on a result of the check. The storage system may further include a cache file controller to read the target block from the second storage device using a cache file block mapping table where location information about a plurality of blocks included in at least one super block cached by the second storage device may be recorded.

According to another aspect of the present invention, there is also provided a reading method of a storage system which uses a high speed storage device as a cache, the reading method including receiving a read request from an application related to a target block, checking whether the target block is stored in a second storage device or a RAM, and returning the target block extracted from at least one of a first storage device, the second storage device, and the RAM based on a result of the check.

According to still another aspect of the present invention, there is also provided a caching method of a storage system using a high speed storage device as a cache, the caching method including storing a target block or a super block, among at least one block stored in a Random Access Memory (RAM), including the target block in a second storage device, based on a number of times that the super block including the target block may be accessed or a number of times that a content file including the super block may be accessed, and storing the target block or the super block including the target block in the second storage device, depending on whether at least one super block adjacent to the super block including the target block used in a predetermined user session is used in at least one remaining user session when a plurality of user sessions exists.

### Effect of the Invention

A storage system according to an embodiment of the present invention may simultaneously use a storage device having a high access rate as a cache, and a storage device having a large volume of storage space, thereby providing a technology capable of providing a sufficient storage space, and also of improving an access rate.

A storage system according to an embodiment of the present invention may include a storage device, having a large volume of storage space, to manage content files in super block units, and a storage device, having a high access rate, to manage cache files in block units, thereby providing a technology capable of improving a rate at which a reading operation proceeds a rate of reading operation.

A storage system according to an embodiment of the present invention may provide an optimized mechanism for properly selecting a block or a super block to be cached, properly deleting the cached block or super block, or the like.

### Brief Description of Drawings

FIG. 1 is a diagram illustrating a storage system according to an embodiment of the present invention.
FIG. 2 is a diagram illustrating a Hard Disk Drive (HDD), a Solid State Drive (SSD), and a Random Access Memory (RAM) according to an embodiment of the present invention.
FIG. 3 is a diagram illustrating mapping tables, and the like according to an embodiment of the present invention.
FIG. 4 is a flowchart illustrating a reading method according to embodiment of the present invention.
FIG. 5 is a flowchart illustrating a caching method according to embodiment of the present invention.
FIG. 6 is a flowchart illustrating a process of updating a cache file block mapping table in a case of deleting a block included in a target content file that is finished being used, according to an embodiment of the present invention.
FIG. 7 is a flowchart illustrating a process of updating a cache file block mapping table in a case of deleting a block included in a target content file that is currently being used, according to an embodiment of the present invention.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

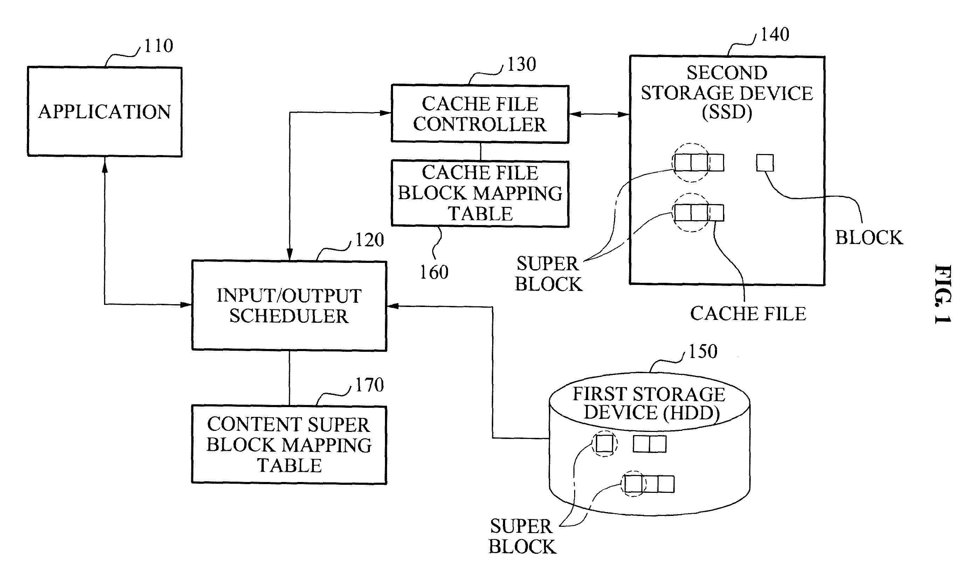

FIG. 1 is a diagram illustrating a storage system according to an embodiment of the present invention.

Referring to FIG. 1, the storage system may receive an input/output (I/O) request from an application 110, and may include an I/O scheduler 120, a cache file controller 130, a first storage device 150, and a second storage device 140. The storage system may be used for various purposes, for example, for a server that streams multimedia content to a plurality of users, and the like.

Here, a capacity of the first storage device 150 may be greater than a capacity of the second storage device 140, and an access rate of the second storage device 140 may be higher than an access rate of the first storage device 150. For example, the first storage device 150 may correspond to a Hard Disk Drive (HDD), and the second storage device 140 may correspond to a Solid State Drive (SSD).

Also, the first storage device 150 may store a plurality of content files including a plurality of blocks, and may manage the plurality of blocks in super block units. The second storage device 140 may generate cache files by caching at least one super block or at least one block, among the plurality of super blocks stored in the first storage device 150. The second storage device 140 may also manage the cache files in block units.

An algorithm of the second storage device 140 to cache the super block or the block, and an algorithm of the second storage device 140 to manage the cached super block and the cached block will be further described hereinafter.

Generally, a large volume storage device such as the HDD has a characteristic of showing a higher performance when a size of data that is requested to be read at a time is greater than expected, whereas a high speed storage device such as the SSD has a characteristic of scarcely improving the performance when the size of data requested to be read at a time is greater than a predetermined value, for example, 256 Kbytes.

In consideration of these characteristics, the second storage device 140 may manage the cache files including the plurality of blocks in block units, and the first storage device 150 may manage the content files in super block units corresponding to groups of n blocks, n being a natural number.

The I/O scheduler 120 may perform a process associated with a read request from the application 110. In this instance, the I/O scheduler 120 may manage the first storage device 150 and the second storage device 140 so that so that the application 110 may recognize the first storage device 150 and the second storage device 140 as a single logical storage device.

When a read request related to a predetermined block is received from the application 110, the I/O scheduler 120 may check whether the predetermined block is stored in a Random Access Memory (RAM) (not shown in FIG. 1) or whether the predetermined block is stored in the second storage device 140. In particular, the I/O scheduler 120 may determine whether the predetermined block (or a super block including the predetermined block) exists in the RAM or the second storage device 140, using a content super block mapping table 170.

When the predetermined block exists in the RAM, the I/O scheduler 120 may read the predetermined block from the RAM. When the predetermined block is cached by the second storage device 140, the I/O scheduler 120 may read the predetermined block using the cache file controller 130. Here, the cache file controller 130 may refer to a cache file block mapping table 160 where location information about the predetermined block may be recorded. Also, when the predetermined block exists only in the first storage device 150, the I/O scheduler 120 may read the super block including the predetermined block from the first storage device 150, and may return the read super block.

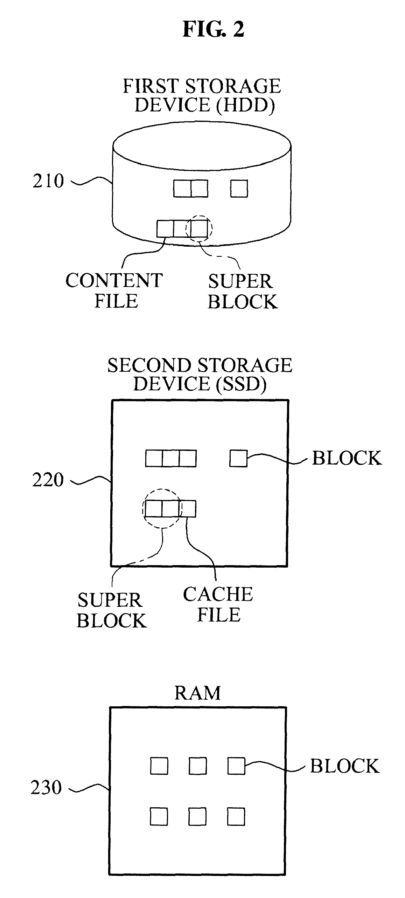

FIG. 2 is a diagram illustrating an HDD, an SSD, and a RAM 230 according to an embodiment of the present invention.

Referring to FIG. 2, a large volume of first storage device 210, for example the HDD, may store a plurality of content files. The first storage device 210 may manage the plurality of content files in super block units, and may return a super block including a predetermined block when a read request related to the predetermined block is received.

A second storage device 220, for example the SSD, may store a plurality of cache files. The cache files may include at least one block, and the second storage device 220 may manage the cache files in block units. The second storage device 220 may improve an I/O rate of a storage system by caching at least one super block included in the plurality of content files stored in the first storage device 210, or at least one block.

In the RAM 230, a block that is currently being used by an application may be loaded. That is, an aspect of the present invention provides a technology capable of efficiently caching frequently used data in an application environment using a streaming server by configuring the second storage device 200 and the RAM 230 to be used for caching. In particular, a space of the RAM 230 may be efficiently used, by using the high speed second storage device 220 for caching.

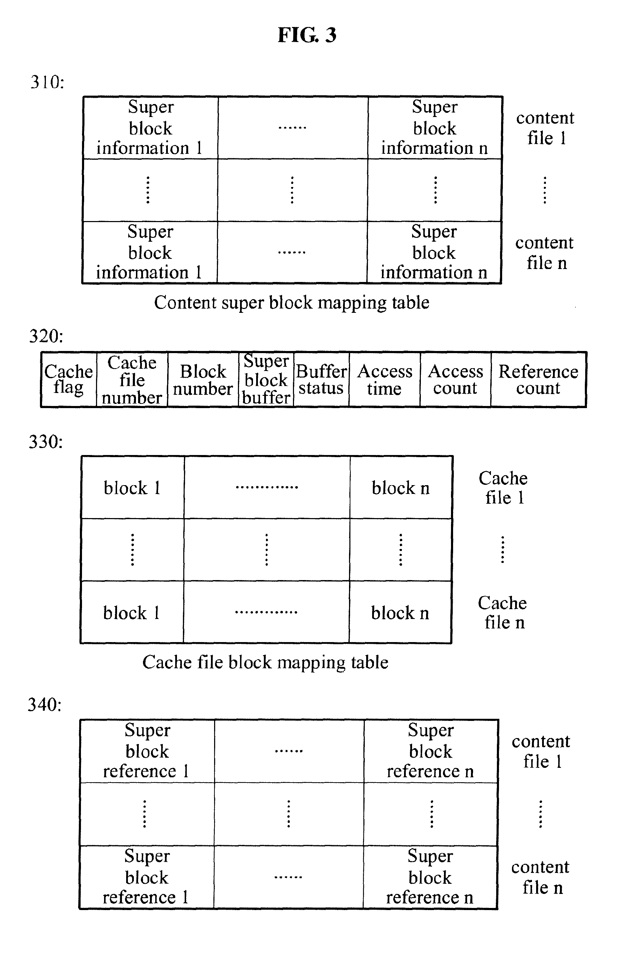

FIG. 3 is a diagram illustrating mapping tables, and the like according to an embodiment of the present invention.

Referring to Fig. 3, a content super block mapping table (CSBMT) 310 may correspond to a table for managing content files that are currently being used, among content files that are stored in a large volume first storage device.

Referring to table 320, each item of the CSBMT 310 may include super block information corresponding to information related to a corresponding super block. The super block information may include a 'cache flag' corresponding to information regarding whether the corresponding super block is cached by a second storage device, a 'cache file number' corresponding to information about a cache file including the corresponding super block, and a 'block number' corresponding to information regarding in which block of the cache file the corresponding super block is stored. Also, the super block information may further include a 'super block buffer' corresponding to information about a super block buffer which refers to a memory buffer that is allocated from a RAM while the corresponding super block is being used, a 'buffer status' corresponding to information about a status of the super block buffer, an 'access time' corresponding to information regarding a time when the corresponding block is accessed, an 'access count' corresponding to information about a number of times that the corresponding super block is accessed, and a 'reference count' corresponding to information about whether the corresponding super block is being used in all user sessions.

Here, the memory buffer that is allocated from the RAM while the corresponding super block is being used may have a size corresponding to a size of the super block, and the 'super block buffer' may correspond to a pointer related to the memory buffer. The 'super block buffer' may be initialized to be NULL at first, and may be allocated when a read request related to the corresponding super block is received. The 'super block buffer' may exist in a state of being allocated while the corresponding super block is being used. When the corresponding super block is finished being used, contents of the corresponding super block may be cached by the second storage device, and the super block buffer corresponding to the memory buffer may be released. Also, when the super block is cached, position information of the super block may be calculated based on the 'cache file number' and the 'block number', in the second storage device.

A cache file block mapping table (CFBMT) 330 may correspond to a table for managing cache files that exist in the high speed second storage device, and may be managed by a cache file controller. Each of indices in lines of the CFBMT 330 may correspond to a pointer indicating each of the cache files, and each of items in the CFBMT 330 may be used as a flag indicating whether a corresponding block is being cached. In particular, according to an aspect of the present invention, it is possible to reduce a required capacity of a memory by processing each of the items in the CFBMT 330 in bit units.

In this instance, each of the items in the CFBMT 330 may be used as position information regarding where a plurality of blocks cached by the second storage device exists. When a target bock is cached by the second storage device, and a read request related to the target block is received from an application, an item corresponding to the target block, among the items in the CFBMT 330, may indicate a set status. Here, the cache file controller may identify position information about the target block using the CFBMT 330, and may read the target block from the second storage device.

In FIG. 3, a content super block reference table (CSBRT) 340 is also illustrated. When a plurality of user sessions receives a streaming service from a storage system, the CSBRT 340 may indicate information regarding whether super blocks, included in content files that are currently being used, are being used in all of the user sessions. Each of items in the CSBRT 340 may be generated based on the 'reference count' included in super block information about each of the super blocks, and may have a configuration in bit units.

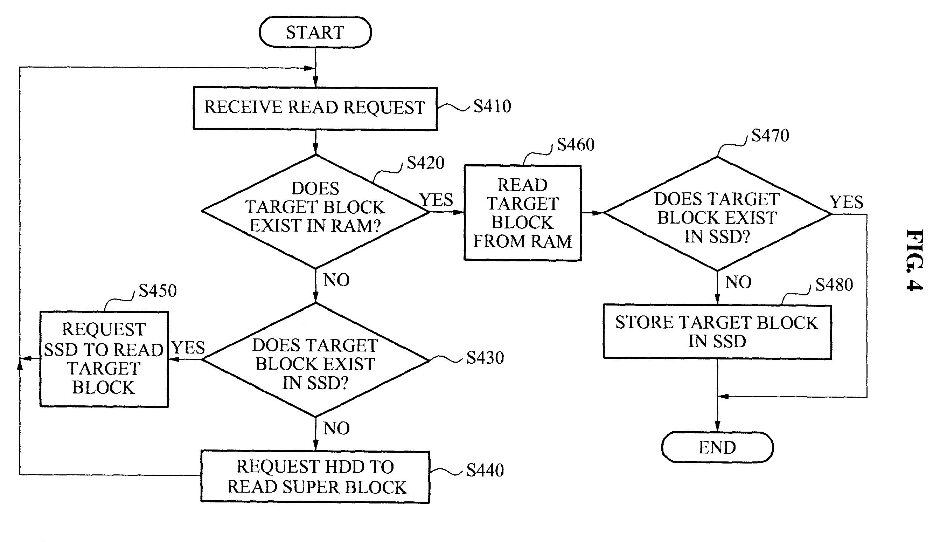

FIG. 4 is a flowchart illustrating a reading method according to embodiment of the present invention.

In operation S410, a storage system according to an embodiment of the present invention may receive a read request related to a target block from an application.

In operation S420, the storage system may determine whether the target block exists in a RAM. When the target block does not exist in the RAM, the storage system may determine whether the target block is cached by a second storage device in operation S430.

For example, the storage system may determine whether the target block exists in the RAM, and whether the target block exists in the second storage device, using super block information about a superblock including the target block by referring to a CSBMT. In particular, the storage system may determine whether the target block exists in a memory based on whether the 'super block buffer', included in the super block information about the super block including the target block, is allocated, or based on a value of 'reference count'. The storage system also may determine whether the target block is being cached by the second storage device based on a value of 'cache flag.'

When the target block exists only in a HDD corresponding to a first storage device, the storage system may transfer, to the HDD, the read request related to the super block including the target block, in operation 440. In this instance, a memory buffer corresponding to a size of the super block may be allocated from the RAM, the 'reference count' related to the memory buffer may increase, and a 'call again' may be returned so that another request related to the target block is received from the application. When the other request is received from the application, the super block including the target block may be returned from the RAM since the super block including the target block exists in the RAM.

When the target block exists in the second storage device, the storage system may transfer the read request related to the target block to the second storage device, using a CFBMT or super block information about the super block including the target block, in operation S450. That is, position information about the target block may be identified using the CFBMT or the 'cache file number' and the 'block number' of the super block information, and the storage system may read the target block from the second storage device based on the identified position information about the target block.

In particular, when the target block exists in the second storage device, a memory buffer corresponding to a size of the super block including the target block may be allocated from the RAM, and the read request related to the target block included in a corresponding cache file of the second storage device may be transferred to the second storage device. In this instance, the 'reference count' and the 'access count' may increase, and the 'access time' may be recorded, and then the 'call again' may be returned.

When the target block exists in the RAM, the storage system may read the target block from the RAM, in operation S460.

In operation S470, the storage system may determine whether the target block is cached by the second storage device. When the target block is cached by the second storage device, a process of reading operation may be terminated. However, when the target block is not cached by the second storage device, the storage system may cache the target block in the second storage device, and may then terminate the process.

An algorithm regarding whether the target block is to be cached by the second storage device will be described hereinafter.

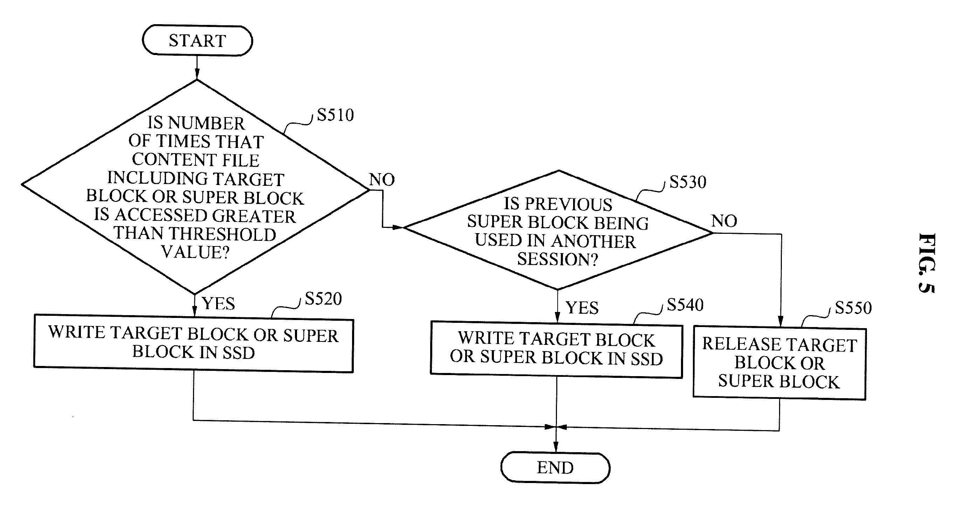

FIG. 5 is a flowchart illustrating a caching method according to embodiment of the present invention.

Referring to FIG. 5, a storage system according to an embodiment of the present invention may determine whether an 'access count' of a content file including a target block or a super block including the target block is greater than a threshold value, in order to determine whether the target block or the super block is to be cached, in operation S510. A high 'access count' of the content file may refer to a high probability that another read request may be received, and accordingly whether the target block is to be cached may be determined based on the 'access count' of the content file.

When the 'access count' of the content file is greater than a threshold value, the storage system may cache the target block or the super block in the second storage device, in operation S520.

Also, the storage system may determine whether the target block or the super block is to be cached, by determining whether the previous super block of the target block is being used in another user session, in operation S530.

For example, it may be assumed that there is a user A and a user B, there is a cache file 1 and a cache file 2, the cache file 1 includes a super block a, a super block b, and a super block c, and the cache file 2 includes a super block d, a super block e, and a super block f. Whether the super block b being used by the user A is to be cached may be determined based on which super block the user B is using. That is, when the user B is using the super block a, a probability that the user B may use the super block b in the future may be predicted to be high. In this instance, the storage system may cache the super block b used by the user A, based on the high probability that the user B may use the super block b in the future. However, when the user B is using the super block e of the cache file 2, a probability that the user B may use the super block b is not high, and accordingly the storage system may not cache the super block b used by the user A.

In this instance, whether the previous super block of the super block including the target block is being used in another user session may be identified through a CSBRT. When an item corresponding to the previous super block, among items of the CSBRT, is in a set status, it may be indicated that the previous super block is being used by another user session, and accordingly the super block including the target block may be determined to be cached.

In operation S540, the storage system may cache the target block or the super block including the target block in the second storage device when it is determined that the previous super block of the super block including the target block is being used by another user session, as a result of the determination based on the CSBRT.

In operation S550, the storage system may release the target block or the super block including the target block from the memory when the target block or the super block including the target block is not cached.

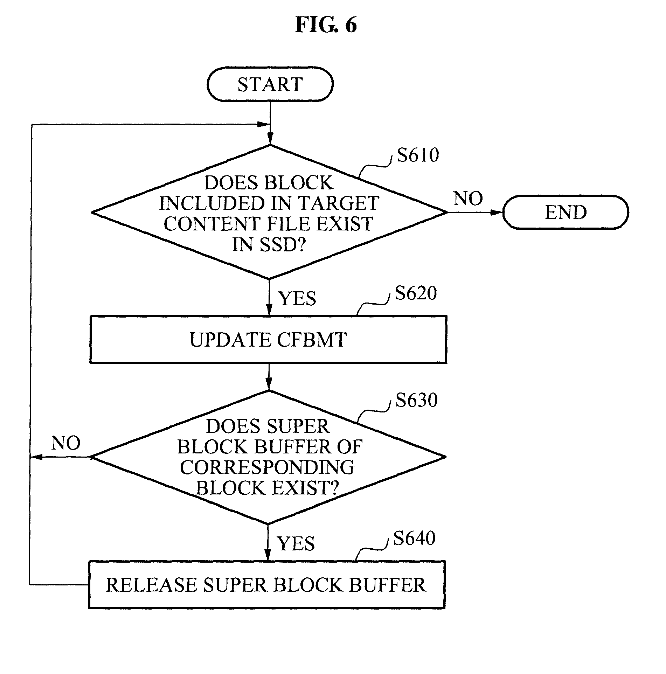

FIG. 6 is a flowchart illustrating a process of updating a cache file block mapping table in a case of deleting a block included in a target content file that is finished being used, according to an embodiment of the present invention.

Referring to FIG. 6, a storage system according to an embodiment of the present invention may determine whether a block, included in a target content file that is finished being used, exists in a second storage device, in operation S610. That is, the storage system may determine whether a cached block or a cached super block exists among blocks or super blocks included in the target content file that is finished being used, using a CSBMT.

In operation S620, the storage system may update a CFBMT instead of deleting the cached block (hereinafter, a target block to be deleted), or the cashed super block (hereinafter, a target super block to be deleted) from the second storage device. That is, the storage system may update the CFMBT by resetting an item corresponding to the target block to be deleted or the target super block to be deleted in the CFBMT.

In operation S630, the storage system may determine whether a super block buffer of the target block to be deleted or a super block buffer of the target super block to be deleted exists in a RAM. When the supper block buffer of the target block to be deleted or the super block buffer of the target super block to be deleted exists in a RAM, the super block buffer may be released in operation S640.

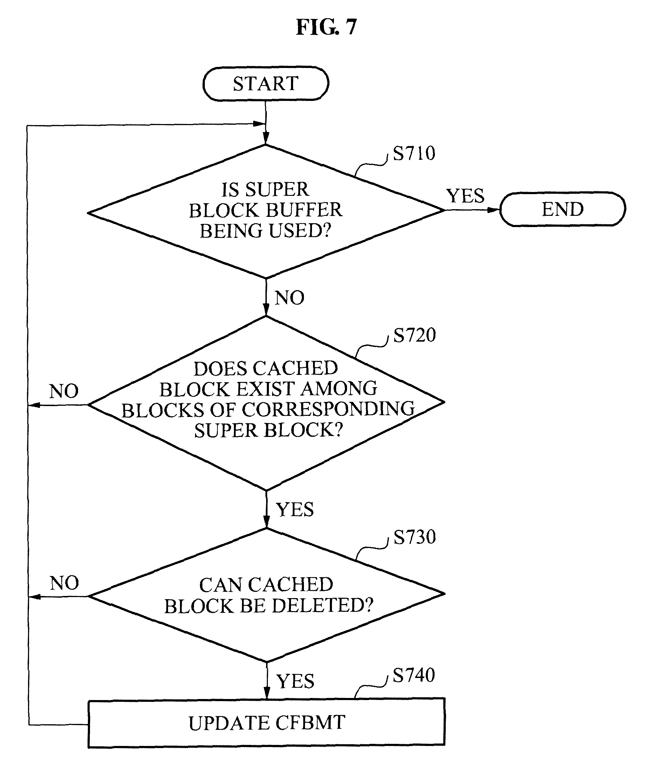

FIG. 7 is a flowchart illustrating a process of updating a cache file block mapping table in a case of deleting a block included in a target content file that is currently being used, according to an embodiment of the present invention.

Referring to FIG. 7, a storage system according to an embodiment of the present invention, may determine whether a super block buffer corresponding to a target super block to be deleted or a corresponding super block is currently being used, based on a CSBMT, in operation S710. When the super block buffer corresponding to the corresponding super block is being used, the process may be terminated.

In operation S720, the storage system may determine whether a cached block exists among blocks of the corresponding super block. In this instance, the storage system may perform the determination using the CSBMT.

In operation S730, the storage system may determine whether the cached block, among the blocks of the corresponding super block, can be deleted. When the cached block can be deleted, the storage system may update a CFBMT instead of deleting the cached block, in operation S740.

The methods according to an embodiment of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention, or vice versa.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

## Claims

1. A storage system using a high speed storage device as a cache, the system comprising:
a first storage device to store a plurality of content files including a plurality of blocks, and to manage the plurality of blocks in super block units, the super block having a predetermined size;
a second storage device to cache at least one super block among the plurality of super blocks, and to manage the at least one super block in block units; and
a Random Access Memory (RAM) to store at least one block among the plurality of blocks,
wherein a capacity of the first storage device is greater than a capacity of the second storage device, or an access rate of the second storage device is higher than an access rate of the first storage device.

2. The system of claim 1, further comprising:
an input/output scheduler to check whether a target block is stored in the second storage device or the RAM in response to a read request from an application related to the target block, and to return the target block extracted from at least one of the first storage device, the second storage device, and the RAM based on a result of the check.

3. The system of claim 2, wherein the input/output scheduler uses a high speed storage device that manages the first storage device and the second storage device as a cache so that the application may recognize the first storage device and the second storage device as a single logical storage device.

4. The system of claim 2, further comprising:
a cache file controller to read the target block from the second storage device using a cache file block mapping table where location information about a plurality of blocks included in at least one super block cached by the second storage device is recorded.

5. The system of claim 2, wherein the input/output scheduler uses a content super block mapping table comprising at least one of information regarding whether the plurality of super blocks is cached by the second storage device, location information regarding the at least one super block that is cached by the second storage device, information regarding whether the plurality of super blocks is stored in the RAM, information regarding an access time of the plurality of super blocks or a number of times that the plurality of super blocks is accessed, and information regarding whether the plurality of super blocks is currently being used.

6. The system of claim 1, wherein the second storage device caches the at least one super block based on a number of times that the plurality of super blocks is accessed, or a number of times that the plurality of content files is accessed.

7. The system of claim 1, wherein, when a plurality of user sessions exists,
the second storage device caches a super block used in a predetermined user session based on a super block used in at least one remaining user session.

8. The system of claim 7, wherein the second storage device caches the super block used in the predetermined user session depending on whether at least one super block adjacent to the super block used in the predetermined user session is used in the at least one remaining user session.

9. The system of claim 1, wherein the first storage device returns a super block including the target block among the at least one super block when a read request from an application related to the target block is received.

10. The system of claim 1, wherein the first storage device corresponds to a Hard Disk Drive (HDD), and the second storage device corresponds to a Solid State Drive (SSD).

11. The system of claim 1. wherein the storage system is used for a server streaming multimedia contents to a plurality of users.

12. The system of claim 4, wherein, when a super block to be deleted, or a block to be deleted exists among the at least one super block cached by the second storage device,
the input/output scheduler updates the cache file block mapping table instead of deleting the super block to be deleted, or the block to be deleted, from the second storage device

13. A reading method of a storage system using a high speed storage device as a cache, the reading method comprising:
receiving a read request from an application related to a target block;
checking whether the target block is stored in a second storage device or a Random Access Memory (RAM); and
returning the target block extracted from at least one of a first storage device, the second storage device, and the RAM based on a result of the check,
when a plurality of content files including a plurality of blocks is stored in the first storage device, the first storage device manages the plurality of blocks in super block units, the second storage device caches at least one super block among the plurality of super blocks, and the RAM stores at least one block among the plurality of blocks, the super block having a predetermined size.

14. The reading method of claim 13, wherein the returning comprises reading the target block from the second storage device using a cache file block mapping table where location information about a plurality of blocks included in at least one super block cached by the second storage device is recorded.

15. The reading method of claim 13, wherein the checking comprises checking whether the target block is stored in the second storage device or the RAM using a content super block mapping table including information regarding whether the plurality of super blocks is cached by the second storage device, and information regarding whether the plurality of super blocks is stored in the RAM.

16. The reading method of claim 13, further comprising:
processing the target block or a super block including the target block to be cached by the second storage device when the target block is stored in the RAM.

17. A caching method of a storage system using a high speed storage device as a cache, the caching method comprising:
storing a target block or a super block, among at least one block stored in a Random Access Memory (RAM), including the target block in a second storage device, based on a number of times that the super block including the target block is accessed or a number of times that a content file including the super block is accessed; and
storing the target block or the super block including the target block in the second storage device, depending on whether at least one super block adjacent to the super block including the target block used in a predetermined user session is used in at least one remaining user session when a plurality of user sessions exists,
when a plurality of content files including a plurality of blocks is stored in a first storage device, the first storage device manages the plurality of blocks in super block units, the second storage devices caches at least one super block among the plurality of super blocks, and the RAM stores at least one block among the plurality of blocks, the super block having a predetermined size.

18. The caching method of claim 17, further comprising:
releasing the target block or the super block including the target block from the RAM when the target block or the super block including the target block is not stored in the second storage device.

19. The caching method of claim 18, wherein the storing of the target block or of the super block, among the at least one block stored in the RAM, including the target block in the second storage device, based on the number of times that the super block including the target block is accessed, or the number of times that the content file including the super block is accessed comprises comparing, with a predetermined threshold value, the number of times that the super block including the target block is accessed or the number of times that the content file including the super block is accessed.

20. A computer readable recording medium storing a program to cause a computer to implement the method of one of claim 13.
